# EUROPÄISCHE PATENTSCHRIFT

(11) **EP 0 475 088 B1**
(45) Veröffentlichungstag und Bekanntmachung des Hinweises auf die Patenterteilung: **02.03.1994**
(21) Anmeldenummer: 91113451.8
(22) Anmeldetag: 10.08.1991
(51) Int. Cl.: B60B 27/00

(54) **Radlager für Anhängerachsen**
Axle bearing for trailer wheels
Palier pour essieux de roues de remorque

(30) Priorität: 14.09.1990 DE 4029176
(43) Veröffentlichungstag der Anmeldung: 18.03.1992
(73) Patentinhaber: Bergische Achsenfabrik Fr. Kotz & Söhne, 51674 Wiehl (DE)
(72) Erfinder: Steiner, Helmut, W-5276 Wiehl 1 (DE)
(74) Vertreter: Stenger, Watzke & Ring Patentanwälte

(56) Entgegenhaltungen:
- EP-A- 0 098 817
- GB-A- 2 112 500
- GB-A- 2 117 459
- US-A- 4 054 999

## Beschreibung

Gegenstand der Erfindung ist ein Radlager für Anhängerachsen mit auf einem Achsschenkel angeordneten Kegelrollenlagern und einer darauf drehbar gelagerten Nabe, wobei die Kegelrollenlager zwei voneinander getrennte Innenringe und einen gemeinsamen Außenring haben.

Aus der technischen Information TINO.WLO5-7 der FAG vom September 1988 ist eine Radlagereinheit der Type TWU für Nutzfahrzeuge bekannt, deren Kegelrollenlager aus zwei voneinander getrennten Innenringen und einem gemeinsamen Außenring gebildet werden. Der Außenring hat einen zylindrischen Mantel und muß deshalb über seine gesamte Breite mit entsprechend hohen Einpreßkräften in eine ebenfalls zylindrische Innenbohrung der Nabe eingepreßt werden. Die beiden Innenringe der Kegelrollenlager dieser bekannten Radlagereinheit haben eine zylindrische Innenbohrung und müssen ebenfalls über ihre gesamte Breite mit entsprechend hohen Einpreßkräften auf einen zylindrischen Lagersitz des Achsschenkels aufgeschoben werden. Für eine Demontage der Kegelrollenlager dieser bekannten Radlagereinheit sind auch entsprechend hohe Auspreßkräfte erforderlich. Ein weiterer Nachteil dieser bekannten Radlagereinheit besteht darin, daß in der Nabe eine verhältnismäßig lange zylindrische Bohrung mit einem Paßsitz für den Außenring der Kegelrollenlager hergestellt werden muß, was sehr aufwendig ist.

Davon ausgehend liegt der Erfindung die **Aufgabe** zugrunde, ein einfach konstruiertes Radlager zu schaffen, dessen Kegelrollenlager mit möglichst geringen Preßkräften in der Nabe vormontiert und zusammen mit der Nabe auf Schiebesitze des Achsschenkels aufgeschoben und auch wieder von diesen abgezogen werden können.

Als technische **Lösung** wird dazu vorgeschlagen, daß die Nabe im Bereich des äußeren Kegelrollenlagers einen größeren Innendurchmesser und im Bereich des inneren Kegelrollenlagers einen kleineren Innendurchmesser hat und daß der Außenring entsprechend im Bereich des äußeren Kegelrollenlagers einen größeren Außendurchmesser und im Bereich des inneren Kegelrollenlagers einen kleineren Außendurchmesser hat.

Bei einer praktischen Ausführungsform kann auch der Achsschenkel im Bereich des äußeren Kegelrollenlagers einen kleineren Außendurchmesser und im Bereich des inneren Kegelrollenlagers einen größeren Außendurchmesser haben und entsprechend der äußere Innenring mit einem kleineren Innendurchmesser und der innere Innenring mit einem größeren Innendurchmesser ausgebildet sein.

Ein nach dieser technischen Lehre ausgebildetes Radlager hat zunächst den **Vorteil,** daß die Länge der Bohrung in der Nabe für den Außenring der Kegelrollenlager auf zwei kürzere Paßsitze aufgeteilt wird, die einfacher hergestellt werden können. In Verbindung mit den ebenfalls gegeneinander abgestuften Lagersitzen am Außenring der Kegelrollenlager werden die Einpreßwege kürzer und die Einpreßkräfte geringer. Durch die ebenfalls gestufte Ausführung des Achsschenkels im Bereich der Lagersitze für die beiden Kegelrollenlager ergibt sich der weitere **Vorteil** einer vereinfachten Montage und Demontage, weil der innere Innenring nicht über die gesamte Breite des Kegelrollenlager auf den Achsschenkel gepreßt werden muß, sondern ebenso wie der Außenring nur über die Breite seines Lagersitzes.

Wenn bei einer praktischen Ausführungsform die Stufe an der Innenwand der Nabe zum inneren Kegelrollenlager und die Stufe am Außenmantel des Außenringes zum äußeren Kegelrollenlager hin verschoben werden, entsteht zwischen den beiden Stufen ein Hohlraum. Dadurch werden die Lagersitze in der Nabe auf den tragenden Bereich der beiden Kegelrollenlager beschränkt und eine weitere Verringerung der notwendigen Ein- und Auspreßkräfte erzielt. Außerdem ermöglicht der Hohlraum eine exakte Einhaltung des Einpreßweges, weil ein an der Stufe des Außenringes entstehender Grat in den Hohlraum hinein weggeschoben werden kann. Dafür ist es ausreichend, wenn der Außenring im Bereich zwischen den Kegelrollenlagern einen Außendurchmesser hat, der zwischen den beiden anderen Außendurchmessern am äußeren und inneren Ende liegt.

Zur weiteren Vereinfachung der Montage und Demontage des Radlagers hat es sich bei einer praktischen Ausführungsform als zweckmäßig erwiesen, den Achsschenkel im Bereich zwischen den beiden Kegelrollenlagern mit einem Außendurchmesser zu versehen, der kleiner als die Außendurchmesser am äußeren und inneren Ende ist. Dadurch werden die Lagersitze der Innenringe auf den tragenden Bereich der Kegelrollenlager verkürzt und es entsteht ein Hohlraum, der ebenfalls geeignet ist, bei der Montage oder Demontage entstehenden Abrieb aufzunehmen.

Um die Montage und Demontage der Nabe mit den vormontierten Kegelrollenlagern am Achsschenkel zu vereinfachen und ohne Spezialwerkzeuge durchführen zu können, wird in weiterer Ausgestaltung der Erfindung vorgeschlagen, eine vor dem äußeren Kegelrollenlager auf ein Außengewinde des Achsschenkels aufgeschraubte Achsmutter mit einem bis an die Innenwand der Nabe heranreichenden Bund zu versehen, der dem Außenring der Kegelrollenlager anliegt und vor dem Bund der Achsmutter einen Sprengring in einer Nut der Nabe zu befestigen. Dabei ist darauf zu achten, daß die Gewindelänge der Achsmutter und die Breite der Lagersitze so aufeinander abgestimmt sind, daß die Montage oder auch Demontage verkantungsfrei durch Anziehen bzw. Lösen der Achsmutter möglich sind. Eine Voraussetzung für diese Vereinfachung sind die mit der Erfindung erreichten Lagersitze geringer Breite für die beiden Kegelrollenlager auf dem Achsschenkel. Die Achsmutter mit ihrem am Außenring der Kegelrollenlager anliegenden Bund bewirkt in Verbindung mit dem an der Innenseite der Kegelrollenlager kleineren Lagersitz eine Ablaufsicherung für das gesamte Radlager.

Weitere Einzelheiten und Vorteile ergeben sich aus der nachfolgenden Beschreibung der zugehörigen Zeichnung, in der eine bevorzugte Ausführungsform eines erfindungsgemäß ausgebildeten Radlagers im Längsschnitt dargestellt worden ist.

Am Ende eines Achskörpers 1 ist ein Achsschenkel 2 befestigt oder angeformt, der mit zwei im Abstand voneinander angeordneten Lagersitzen 3,4 für ein äußeres Kegelrollenlager 5 und ein inneres Kegelrollenlager 6 versehen ist.

Die beiden Kegelrollenlager 5,6 haben zwei getrennte Innenringe 7,8 und einen gemeinsamen Außenring 9. Der Außenring ist an seinem Mantel mit zwei Stufen versehen und hat über seine Breite gesehen drei verschiedene Durchmesser D1, D2 und D3, die von der Außenseite zur Innenseite hin abnehmen. Dadurch, daß der größere Durchmesser D1 auf den Bereich des äußeren Kegelrollenlagers 5 und der kleinere Durchmesser D3 auf den Bereich des inneren Kegelrollenlager 6 beschränkt ist, entsteht zwischen den beiden Lagersitzen 10 und 11 ein Hohlraum 12.

Der Außenring 9 beider Kegelrollenlager 5 und 6 ist in einer Nabe 13 zum Befestigen einer Bremstrommel und eines Rades angeordnet, die aus Vereinfachungsgründen nicht dargestellt worden sind.

Die Nabe 13 ist auf ihrer Innenseite mit einer Stufe versehen, die zum inneren Kegelrollenlager 6 hin verschoben ist. Dadurch werden in der Nabe 13 ebenfalls Lagersitze 10 und 11 mit den Durchmessern D1 und D3 gebildet.

An seinem äußeren Ende ist der Achsschenkel 2 mit einem Gewindezapfen 14 versehen, auf dem eine Achsmutter 15 mit einem angeformten Bund 16 befestigt ist, welcher innerhalb der Innenbohrung der Nabe 13 dem Außenring 9 der beiden Kegelrollenlager 5 und 6 anliegt. Außen vor dem Bund 16 der Achsmutter 15 ist ein Sprengring 17 in einer umlaufenden Nut der Nabe 13 befestigt. Zwischen der Achsmutter 15 und dem äußeren Innenring des Kegelrollenlagers 5 ist ein Zwischenring 18 angeordnet, der gegenüber dem Achsschenkel 2 oder gegenüber der Achsmutter 15 gegen Verdrehen gesichert ist.

Das gesamte Radlager bestehend aus den beiden Kegelrollenlagern 5 und 6 und der Nabe 13 kann mit der Achsmutter 15 montiert und auch demontiert werden. Bei der Montage wird das vormontierte Radlager mit dem Bund 16 der Achsmutter 15, welcher gegen den Außenring 9 der beiden Kegelrollenlager 5 und 6 drückt, auf die gestuften Lagersitze 3 und 4 des Achsschenkels 2 aufgeschoben. Bei der Demontage wird das gesamte Radlager mit dem Bund 16 der Achsmutter 15 am Sprengring 17 anliegend wieder von den gestuften Lagersitzen 3 und 4 des Achsschenkels 2 abgezogen. Um diese vereinfachte Montage und Demontage zu ermöglichen, müssen die Lagersitze 3 und 4 eine mit der Länge des Gewindezapfens 14 korrespondierende, möglichst geringe Breite haben, die sich auf den Tragbereich der beiden Kegelrollenlager 5 und 6 beschränken. Zu diesem Zweck ist zwischen den beiden Lagersitzen 3 und 4 mit den Durchmessern d1 und d3 noch ein Bereich mit einem dazwischen liegenden Durchmesser d2 vorgesehen, welcher die Lagersitze 3 und 4 auf eine mindestens notwendige Breite verringert und einen Hohlraum 19 schafft.

Nach außen hin ist das Radlager mit einer Radkappe 20 verschlossen. Auf der Innenseite sorgt ein Dichtring 21 dafür, daß kein Schmutz in das Radlager eindringen kann.

### Bezugszeichenliste

- 1: Achskörper
- 2: Achsschenkel
- 3: Lagersitz
- 4: Lagersitz
- 5: Kegelrollenlager (äußeres)
- 6: Kegelrollenlager (inneres)
- 7: Innenring (äußerer)
- 8: Innenring (innerer)
- 9: Außenring
- 10: Lagersitz
- 11: Lagersitz
- 12: Hohlraum
- 13: Nabe
- 14: Gewindezapfen
- 15: Achsmutter
- 16: Bund
- 17: Sprengring
- 18: Zwischenring
- 19: Hohlraum
- 20: Radkappe
- 21: Dichtring

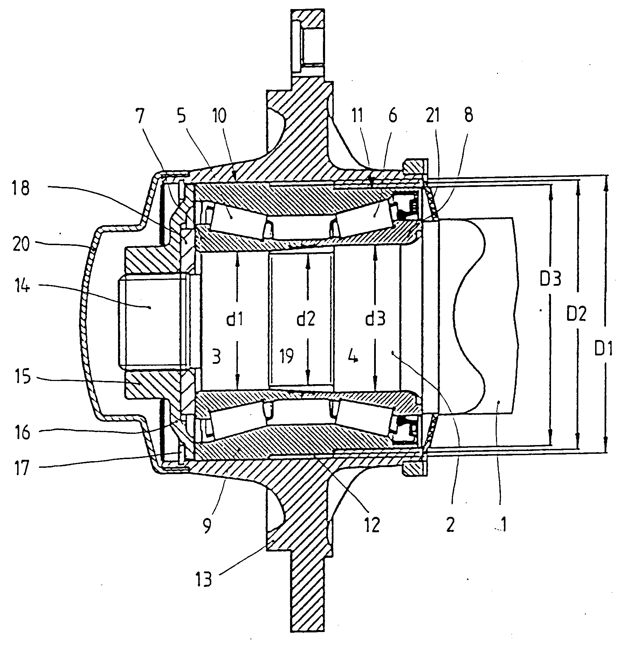

## Patentansprüche

1. Radlager für Anhängerachsen mit auf einem Achsschenkel (2) angeordneten Kegelrollenlagern (5,6) und einer darauf drehbar gelagerten Nabe (13), wobei die Kegelrollenlager (5,6) zwei voneinander getrennte Innenringe (7,8) und einen gemeinsamen Außenring (9) haben,
**dadurch gekennzeichnet,**
daß die Nabe (13) im Bereich des äußeren Kegelrollenlagers (5) einen größeren Innendurchmesser (D1) und im Bereich des inneren Kegelrollenlagers (6) einen kleineren Innendurchmesser (D3) hat und
daß entsprechend der Außenring (9) im Bereich des äußeren Kegelrollenlagers (5) ebenfalls einen größeren Außendurchmesser (D1) und im Bereich des inneren Kegelrollenlagers (6) einen kleineren Außendurchmesser (D3) hat.

2. Radlager nach Anspruch 1, dadurch gekennzeichnet, daß der Achsschenkel (2) im Bereich des äußeren Kegelrollenlagers (5) einen kleineren Außendurchmesser (d1) und im Bereich des inneren Kegelrollenlagers (6) einen größeren Außendurchmesser (d3) hat und daß entsprechend der äußere Innenring (7) ebenfalls einen kleineren Innendurchmesser (d1) und der innere Innenring (8) einen größeren Innendurchmesser (d3) hat.

3. Radlager nach Anspruch 1, dadurch gekennzeichnet, daß die Stufe zwischen den beiden Innendurchmessern (D1, D3) an der Innenwand der Nabe (13) zum inneren Kegelrollenlager (6) und die Stufe zwischen den beiden Außendurchmessern (D3,D1) am Außenmantel des Außenringes (9) zum äußeren Kegelrollenlager (5) hin verschoben sind, so daß zwischen den beiden Stufen ein Hohlraum (12) entsteht.

4. Radlager nach Anspruch 1, dadurch gekennzeichnet, daß der Außenring (9) im Bereich zwischen den Kegelrollenlagern (5,6) einen Außendurchmesser (D2) hat, der zwischen den beiden anderen Außendurchmessern (D1,D3) am äußeren und inneren Ende liegt.

5. Radlager nach den Ansprüchen 1 und 2, dadurch gekennzeichnet, daß der Achsschenkel (2) im Bereich zwischen den beiden Kegelrollenlagern (5,6) einen Außendurchmesser (d2) hat, der kleiner als die Außendurchmesser (d1,d3) am äußeren und inneren Ende ist.

6. Radlager nach Anspruch 1 mit einer Achsmutter (15), die vor dem äußeren Kegelrollenlager (5) auf einen Gewindezapfen (14) des Achsschenkels (2) aufgeschraubt ist, dadurch gekennzeichnet, daß die Achsmutter (15) einen bis an die Innenwand der Nabe (13) heranreichenden Bund (16) hat, der dem Außenring (9) anliegt.

7. Radlager nach Anspruch 6, dadurch gekennzeichnet, daß zwischen der Achsmutter (15) und dem Innenring (7) des äußeren Kegelrollenlagers (5) ein Zwischenring (18) angeordnet ist.

8. Radlager nach Anspruch 6, dadurch gekennzeichnet, daß vor dem Bund (16) der Achsmutter (15) ein Sprengring (17) in einer Nut der Nabe (13) befestigt ist.

## Claims

1. Wheel bearing for trailer axles having tapered-roller bearings (5, 6) arranged on an axle stub (2), and having a hub (13) mounted rotatably on the tapered-roller bearings, said tapered-roller bearings (5, 6) having two mutually separate internal rings (7, 8) and a common external ring (9), characterized in that the hub (13) has a larger inside diameter (D1) in the region of the outer tapered-roller bearing (5) and a smaller inside diameter (D3) in the region of the inner tapered-roller bearing (6), and in that correspondingly the external ring (9) likewise has a larger outside diameter (D1) in the region of the outer tapered-roller bearing (5) and a smaller outside diameter (D3) in the region of the inner tapered-roller bearing (6).

2. Wheel bearing according to Claim 1, characterized in that the axle stub (2) has a smaller outside diameter (d1) in the region of the outer tapered-roller bearing (5) and a larger outside diameter (d3) in the region of the inner tapered-roller bearing (6), and in that correspondingly the outer internal ring (7) likewise has a smaller inside diameter (d1) and the inner internal ring (8) has a larger inside diameter (d3).

3. Wheel bearing according to Claim 1, characterized in that the step between the two inside diameters (D1, D3) on the inner wall of the hub (13) is displaced towards the inner tapered-roller bearing (6), and the step between the two outside diameters (D3, D1) on the outer surface of the external ring (9) is displaced towards the outer tapered-roller bearing (5) so that a hollow space (12) is produced between the two steps.

4. Wheel bearing according to Claim 1, characterized in that, in the region between the tapered-roller bearings (5, 6), the external ring (9) has an outside diameter (D2) which lies between the two other outside diameters (D1, D3) at the outer and inner ends.

5. Wheel bearing according to Claims 1 and 2, characterized in that, in the region between the two tapered-roller bearings (5, 6), the axle stub (2) has an outside diameter (d2) which is smaller than the outside diameter (d1, d3) at the outer and inner ends.

6. Wheel bearing according to Claim 1, having an axle nut (15) which is screwed onto a threaded pin (14) of the axle stub (2) in front of the outer tapered-roller bearing (5), characterized in that the axle nut (15) has a collar (16) which reaches up to the inner wall of the hub (13) and bears against the external ring (9).

7. Wheel bearing according to Claim 6, characterized in that an intermediate ring (18) is arranged between the axle nut (15) and the internal ring (7) of the outer tapered-roller bearing (5).

8. Wheel bearing according to Claim 6, characterized in that a spring ring (17) is fixed in a groove of the hub (13) in front of the collar (16) of the axle nut (15).

## Revendications

1. Palier de roue pour essieux de remorque, comportant des roulements à rouleaux coniques (5, 6) disposes sur une fusée d'essieu (2), et sur lesquels est monté tournant un moyeu (13), les roulements à rouleaux coniques (5, 6) possédant deux bagues intérieures (7, 8) séparées l'une de l'autre et une bague extérieure (9) commune, caractérise en ce que le moyeu (13) présente, dans la zone du roulement à rouleaux coniques extérieur (5), un diamètre intérieur (D1) plus grand, et dans la zone du roulement à rouleaux coniques intérieur (6), un diamètre intérieur (D3) plus petit, et en ce que de manière correspondante, la bague extérieure (9) présente, dans la zone du roulement à rouleaux coniques extérieur (5), également un diamètre extérieur (D1) plus grand, et dans la zone du roulement à rouleaux coniques intérieur (6), un diamètre extérieur (D3) plus petit.

2. Palier de roue selon la revendication 1, caractérisé en ce que la fusée d'essieu (2) présente, dans la zone du roulement à rouleaux coniques extérieur (5), un diamètre extérieur (d1) plus petit, et dans la zone du roulement à rouleaux coniques intérieur (6), un diamètre extérieur (d3) plus grand, et en ce que de manière correspondante, la bague intérieure (7) située à l'extérieur présente également un diamètre intérieur (d1) plus petit, et la bague intérieure (8) située à l'intérieur, un diamètre intérieur (d3) plus grand.

3. Palier de roue selon la revendication 1, caractérisé en ce que l'épaulement entre les deux diamètres intérieurs (D1, D3) sur la paroi intérieure du moyeu (13), est décalé en direction du roulement à rouleaux coniques intérieur (6), et l'épaulement entre les deux diamètres extérieurs (D3, D1) sur la surface périphérique extérieure de la bague extérieure (9), est décalé en direction du rouleinent à rouleaux coniques extérieur (5), de sorte qu'il en résulte une cavité (12) entre les deux épaulements.

4. Palier de roue selon la revendication 1, caractérisé en ce que la bague extérieure (9) présente, dans la zone entre les roulements à rouleaux coniques (5, 6), un diamètre extérieur (D2) se situant entre les deux autres diamètres extérieurs (D1, D3) à l'extrémité extérieure et à l'extrémité intérieure.

5. Palier de roue selon les revendications 1 et 2, caractérisé en ce que la fusée d'essieu (2) présente, dans la zone entre les deux roulements à rouleaux coniques (5, 6), un diamètre extérieur (d2) qui est inférieur aux diamètres extérieurs (d1, d3) à l'extrémité extérieure et à l'extrémité intérieure.

6. Palier de roue selon la revendication 1, comportant un écrou d'essieu (15) qui est vissé, devant le roulement à rouleaux coniques extérieur (5), sur un tourillon fileté (14) de la fusée d'essieu (2), caractérisé en ce que l'écrou d'essieu (15) comporte une embase (16) qui s'étend jusqu'à la paroi intérieure du moyeu (13), et qui s'applique sur la bague extérieure (9).

7. Palier de roue selon la revendication 6, caractérisé en ce qu'entre l'écrou d'essieu (15) et la bague intérieure (7) du roulement à rouleaux coniques extérieur (5), est disposée une bague intermédiaire (18).

8. Palier de roue selon la revendication 6, caractérisé en ce qu'un jonc (17) est fixé devant l'embase (16) de l'écrou d'essieu (15), dans une rainure du moyeu (13).
